(19) Europäisches Patentamt / European Patent Office / Office européen des brevets

(11) **EP 4 755 670 A1**

(12) **EUROPEAN PATENT APPLICATION**
published in accordance with Art. 153(4) EPC

(43) Date of publication:
**10.06.2026 Bulletin 2026/24**

(21) Application number: **24848662.3**

(22) Date of filing: **31.05.2024**

(51) International Patent Classification (IPC):
**B60G 17/015** (2006.01)

(52) Cooperative Patent Classification (CPC):
**B60G 17/015**

(86) International application number:
**PCT/JP2024/020014**

(87) International publication number:
**WO 2025/028001 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.08.2023 JP 2023125689**

(71) Applicant: **TOYOTA JIDOSHA KABUSHIKI KAISHA**
**Toyota-Shi,**
**Aichi-Ken 471-8571 (JP)**

(72) Inventor: **FURUTA, Hiroki**
**Toyota-shi, Aichi 471-8571 (JP)**

(74) Representative: **J A Kemp LLP**
**80 Turnmill Street**
**London EC1M 5QU (GB)**

(54) **VEHICLE BEHAVIOR CONTROL DEVICE, VEHICLE BEHAVIOR CONTROL METHOD, AND VEHICLE BEHAVIOR CONTROL PROGRAM**

(57)     The present disclosure provides a technique that enables cost reduction for a vehicle behavior control apparatus. The vehicle behavior control apparatus includes: an i-th suspension provided on an i-th wheel (i=1, 2, 3) among four wheels of a vehicle; a fourth suspension provided on a fourth wheel other than the i-th wheel; and a controller. The i-th suspension includes an i-th actuator whose position control is performed by the controller. The controller is configured to: obtain a required value of a behavior parameter that determines behavior of the vehicle; convert the required value of the behavior parameter into an i-th required control force for the i-th wheel; calculate an i-th position control amount of the i-th actuator based on the i-th required control force; and perform the position control on the i-th actuator in accordance with the i-th position control amount.

[Fig. 5]

## Description

[Technical Field]

The present disclosure relates to a technique for controlling the behavior of a vehicle.

[Background Art]

Patent Literature 1 discloses a technique for controlling the behavior of a vehicle with a small number of actuators. In particular, a technique is disclosed that uses actuators provided on three wheels of the four wheels to enable control equivalent to that achieved when an actuator is provided on each of the four wheels.

[Citation List]

[Patent Literature]

[PTL 1]
JP 2023-047810 A

[Summary of Invention]

[Technical Problem]

The technique disclosed in Patent Literature 1 controls the force (torque) of each actuator. In order to perform force (torque) control on the actuator, it is necessary to mount at least a force sensor or a torque sensor for detecting the force (torque). For this reason, the cost of an actuator configured to enable the force (torque) control is high.
In view of the problem described above, an object of the present disclosure is to provide a technique that enables cost reduction with respect to behavior control of a vehicle.

[Solution to Problem]

A first aspect of the present disclosure relates to a vehicle behavior control apparatus.
A vehicle behavior control apparatus according to the first aspect includes: an i-th suspension provided on an i-th wheel (i=1, 2, 3) among four wheels of a vehicle; a fourth suspension provided on a fourth wheel other than the i-th wheel; and a controller. The i-th suspension includes an i-th actuator whose position control is performed by the controller. The controller is configured to: obtain a required value of a behavior parameter that determines behavior of the vehicle; convert the required value of the behavior parameter into an i-th required control force for the i-th wheel; calculate an i-th position control amount of the i-th actuator based on the i-th required control force; and perform the position control on the i-th actuator in accordance with the i-th position control amount.

[Advantageous Effects of Invention]

According to the present disclosure, the cost of the vehicle behavior control apparatus can be reduced.

[Brief Description of Drawings]

[Fig. 1]

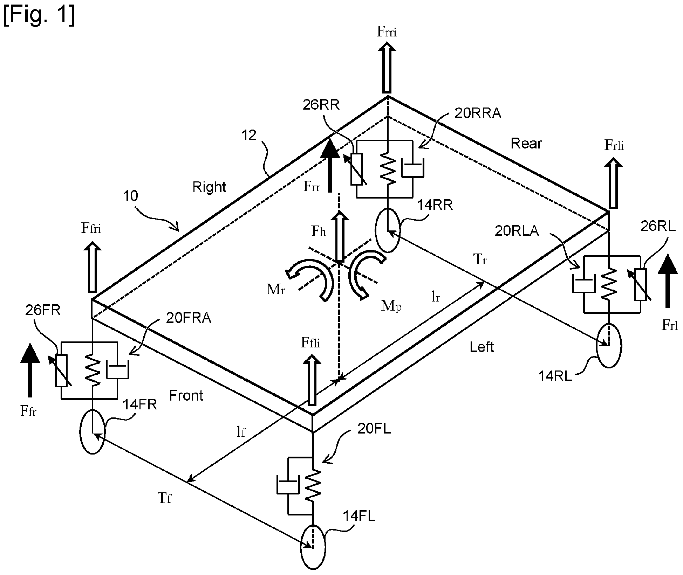

Fig. 1 is a diagram showing a behavior model for behavior control of a vehicle by a vehicle behavior control apparatus according to an embodiment.
[Fig. 2]

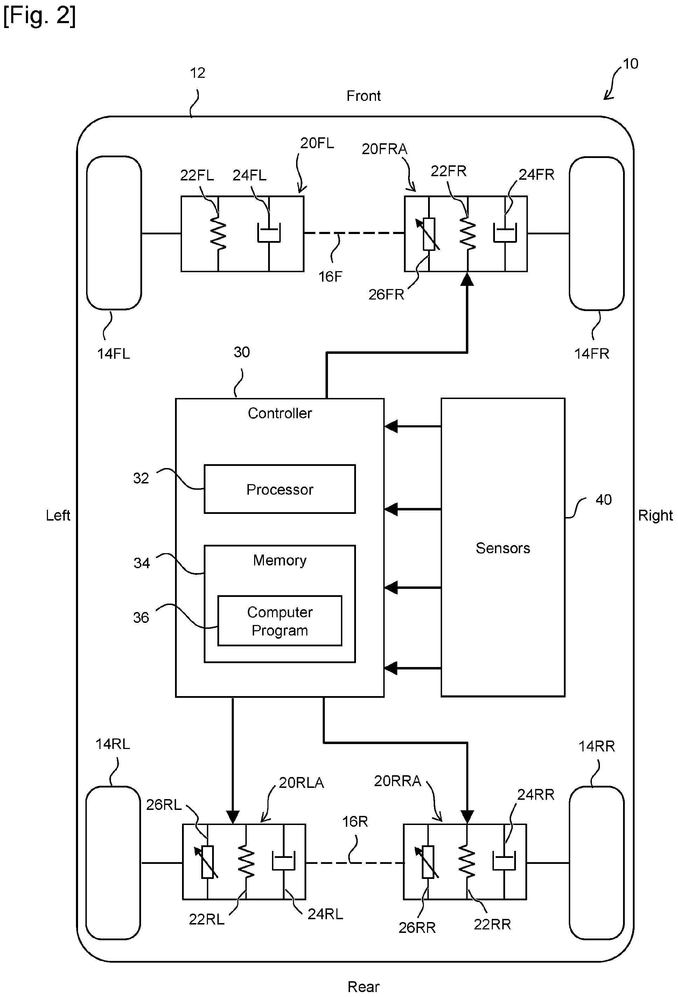

Fig. 2 is a diagram used to describe a configuration of the vehicle behavior control apparatus according to an embodiment.
[Fig. 3]

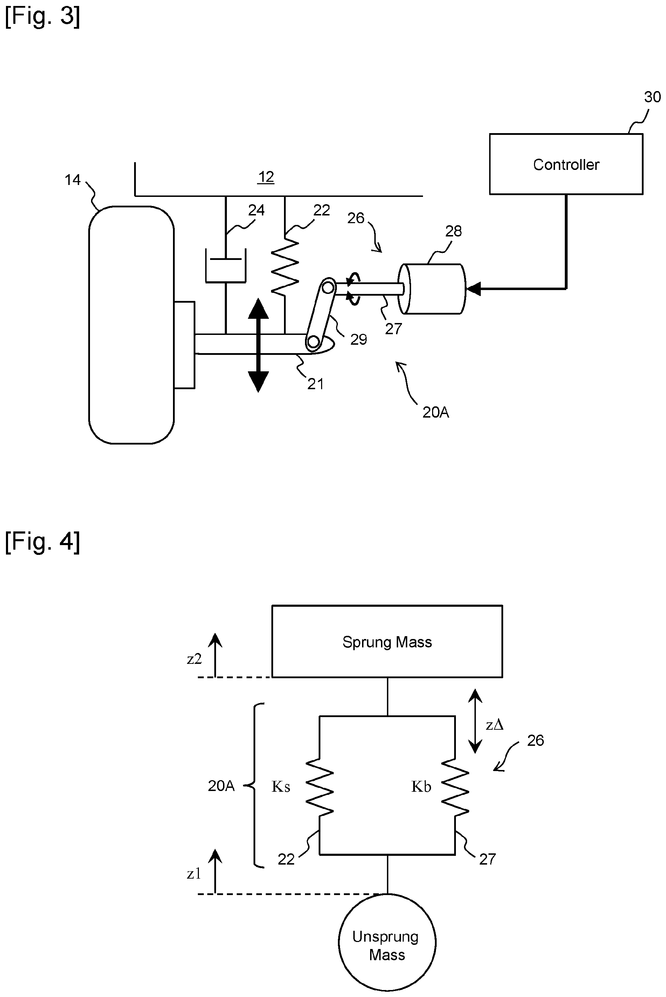

Fig. 3 is a diagram showing an example of a configuration of an actuator according to an embodiment.
[Fig. 4]
Fig. 4 shows an active suspension according to an embodiment modeled in terms of spring elements.

[Fig. 5]

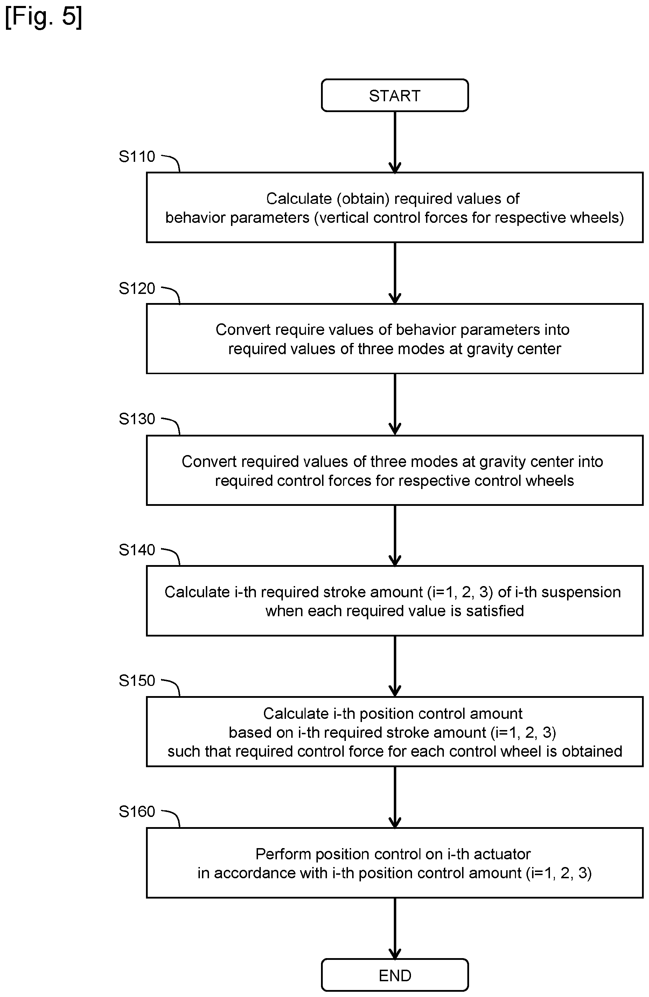

Fig. 5 is a flowchart showing processing executed by the behavior control apparatus according to the first embodiment.
[Fig. 6]

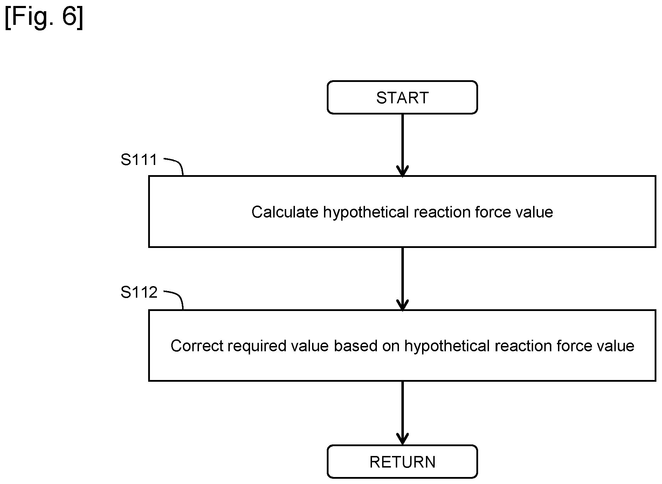

Fig. 6 is a flowchart showing processing executed for correcting a required value of a behavior parameter.
[Fig. 7]

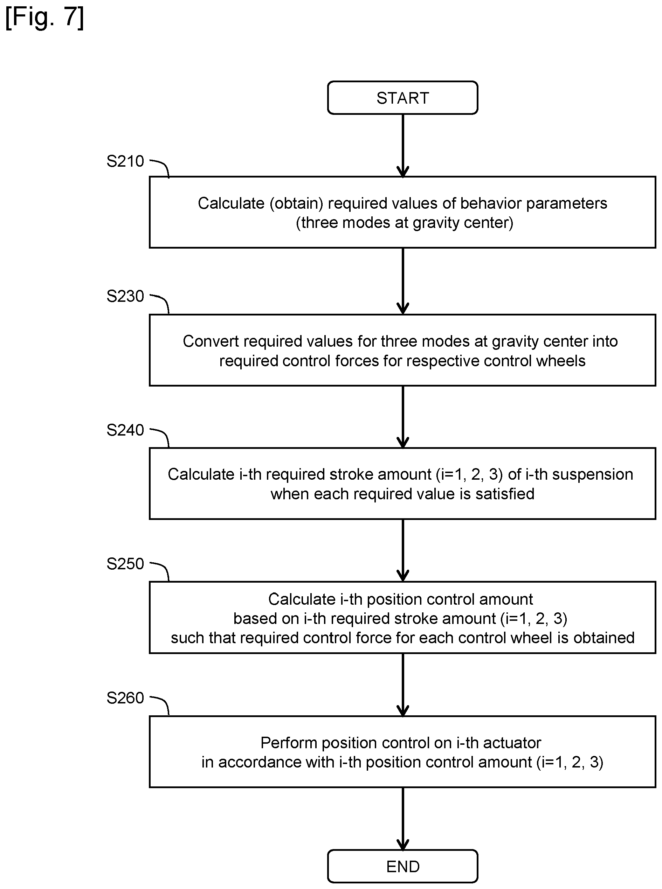

Fig. 7 is a flowchart showing processing executed by a behavior control apparatus according to the second embodiment.

[Description of Embodiments]

1. First Embodiment

1.1 Behavior Model of Vehicle

Behavior control of a vehicle by a vehicle behavior control apparatus according to the first embodiment is performed based on a behavior model. Fig. 1 shows the behavior model for the behavior control of a vehicle 10 by the vehicle behavior control apparatus according to the first embodiment. In the behavior control of the vehicle 10, a required value of a behavior parameter that determine the behavior of the vehicle 10 is calculated, and the control is performed to realize the calculated required value. In the first embodiment, the vertical control force for each wheel is used as the behavior parameter. The behavior model shown in Fig. 1 illustrates a vertical control force Frli for a left rear wheel 14RL, a vertical control force Frri for a right rear wheel 14RR, a vertical control force Ffli for a left front wheel 14FL, and a vertical control force Ffri for a right front wheel 14FR.

As the behavior control of the vehicle 10, various types of control are assumed depending on the purpose. Examples of the behavior control of the vehicle 10 may include sprung feedback control, unsprung feedback control, preview control, and posture control. The sprung feedback control reduces vibration of the sprung mass based on a sprung mass state quantity calculated using a measurement value of a sprung mass acceleration sensor. The unsprung feedback control reduces vibration of the unsprung mass based on an unsprung mass state quantity calculated using measured values of the sprung mass acceleration sensor and a vehicle height sensor. The preview control uses a database of camera images or high-definition map data to predict a road condition and reduces vibration. The posture control controls the posture in response to steering or acceleration. Of course, these various types of control may be combined.

The required value of the behavior parameter is calculated to achieve the objective of the behavior control. In the present embodiment, the behavior control may be any of the various types of control as described above. That is, in the present embodiment, the method for calculating the required value of the behavior parameter is not particularly limited.

The behavior of the vehicle 10 can be expressed in terms of motion modes at the sprung gravity center position (hereinafter, simply referred to as "three modes at the gravity center"), which are motion modes for a roll moment Mr, a pitch moment Mp, and a heave force Fh acting on the gravity center of the vehicle 10. Therefore, the required values of the behavior parameters can be converted into the three modes at the gravity center. In particular, when the vertical control force for each wheel is used as the behavior parameter, the required values can be converted into the three modes at the gravity center by the following Equation 1. In Equation 1, lf, lr, Tf, and Tr are the distance between the gravity center of the front axle, the distance between the gravity center of the rear axle, the front wheel tread, and the rear wheel tread, respectively (see Fig. 1). These parameters can be managed in advance as specification information of the vehicle 10.
[Math. 1]

$$\begin{bmatrix} F_h \\ M_r \\ M_p \end{bmatrix} = \begin{bmatrix} 1 & 1 & 1 & 1 \\ \dfrac{-T_f}{2} & \dfrac{T_f}{2} & \dfrac{-T_r}{2} & \dfrac{T_r}{2} \\ -l_f & -l_f & l_r & l_r \end{bmatrix} \begin{bmatrix} F_{fri} \\ F_{fli} \\ F_{rri} \\ F_{rli} \end{bmatrix} \quad \cdots (1)$$

Hereinafter, the values obtained by converting the required values of the behavior parameters into the three modes at the gravity center will be referred to as "required values of the three modes at the gravity center". In addition, with respect to the required values of the three modes at the gravity center, required values of the roll moment Mr, the pitch moment Mp, and the heave force Fh are also referred to as a required roll moment Mr, a required pitch moment Mp, and a required heave force Fh, respectively.

In the behavior model of the vehicle 10 shown in Fig. 1, a suspension 20RLA that suspends the left rear wheel 14RL is configured as an active suspension that includes an actuator 26RL. A suspension 20RRA that suspends the right rear wheel 14RR is also configured as an active suspension that includes an actuator 26RR. A suspension 20FRA that suspends the right front wheel 14FR is also configured as an active suspension that includes an actuator 26FR. The suspensions 20FRA, 20RRA, and 20RLA are so-called full active suspensions that can actively apply vertical control forces to the wheels 14FR, 14RR, and 14RL by the actuators 26FR, 26RR, and 26RL. On the other hand, a suspension 20FL that suspends the front left wheel 14FL is a general suspension that does not include an actuator, that is, a non-active suspension.

The behavior model shown in Fig. 1 illustrates a control force Frl applied to the left rear wheel 14RL by the actuator 26RL, a control force Frr applied to the right rear wheel 14RR by the actuator 26RR, and a control force Ffr applied to the right front wheel 14FR by the actuator 26FR. Hereinafter, the wheels provided with the active suspensions will also be referred to as "controlled wheels". That is, in the behavior model shown in Fig. 1, the left rear wheel 14RL, the right rear wheel 14RR, and the right front wheel 14FR are the controlled wheels.

The inventor of the present disclosure has found that the required values of the three modes at the gravity center can be converted into the control forces for the controlled wheels by the following Equation 2.

[Math. 2]

$$\begin{bmatrix} F_{fr} \\ F_{rr} \\ F_{rl} \end{bmatrix} = \begin{bmatrix} 1 & 1 & 1 \\ \dfrac{-T_f}{2} & \dfrac{-T_r}{2} & \dfrac{T_r}{2} \\ -l_f & l_r & l_r \end{bmatrix}^{-1} \begin{bmatrix} F_h \\ M_r \\ M_p \end{bmatrix} \quad \cdots (2)$$

As described above, the required values of the behavior parameters can be converted into the required values of the three modes at the gravity center. Therefore, the required values of the behavior parameters can be converted into the control forces for the respective controlled wheels. Hereinafter, the control force for each of the controlled wheels that is obtained by converting the required value of the behavior parameter will also be referred to as a "required control force". Further, by controlling the actuators 26RL, 26RR, and 26FR so as to satisfy the required control forces, the required values of the behavior parameters can be realized. That is, a desired vehicle behavior can be achieved with only the three actuators 26RL, 26RR, and 26FR. Reducing the number of required actuators is favorable from the viewpoints of improving ease of mounting, reducing costs, reducing weight, and saving power, for example.

The above-described behavior control of the vehicle 10 may be realized by "torque control" of the actuators 26RL, 26RR, and 26FR. However, in the example of the torque control, a force sensor or a torque sensor, for example, is needed. Therefore, in the present embodiment, in order to further reduce the mounting space and costs, a method is proposed for realizing the above-described behavior control by "position control" on each of the actuators 26RL, 26RR, and 26FR. The vehicle behavior control apparatus that controls the behavior of the vehicle 10 by performing the position control on the actuators 26RL, 26RR, and 26FR will be described below in detail.

1.2 Vehicle Behavior Control Apparatus

Fig. 2 is a diagram used to describe the configuration of the vehicle behavior control apparatus according to the first embodiment.

In Fig. 2, the vehicle 10 includes the left front wheel 14FL and the right front wheel 14FR, which are steered wheels, on a front axle 16F, and the left rear wheel 14RL and the right rear wheel 14RR, which are non-steered wheels, on a rear axle 16R. However, the rear wheels 14RL and 14RR may also be provided with a steering mechanism. Further, the vehicle 10 may be a front-wheel drive vehicle that drives the front wheels 14FL and 14FR, a rear-wheel drive vehicle that drives the rear wheels 14RL and 14RR, or an all-wheel drive vehicle that drives the front wheels 14FL and 14FR and the rear wheels 14RL and 14RR.

The vehicle behavior control apparatus includes the suspension 20RLA (hereinafter, also referred to as a "first suspension 20RLA") provided on the left rear wheel 14RL (first wheel), the suspension 20RRA (hereinafter, also referred to as a "second suspension 20RRA") provided on the right rear wheel RR (second wheel), the suspension 20FRA (hereinafter, also referred to as a "third suspension 20FRA") provided on the right front wheel 14FR (third wheel), and the suspension 20FL (hereinafter, also referred to as a "fourth suspension 20FL") provided on the left front wheel 14FL (fourth wheel), a controller 30, and sensors 40. As described above, the first suspension 20RLA, the second suspension 20RRA, and the third suspension 20FRA are active suspensions, and the fourth suspension 20FL is a non-active suspension.

The fourth suspension 20FL, which is a non-active suspension, includes a spring 22FL and a shock absorber 24FL. The first suspension 20RLA, which is an active suspension, includes the actuator 26RL (hereinafter, also referred to as a "first actuator 26RL") in addition to a spring 22RL and a shock absorber 24RL.

Similarly, the second suspension 20RRA, which is an active suspension, includes the actuator 26RR (hereinafter, also referred to as a "second actuator 26RR") in addition to a spring 22RR and a shock absorber 24RR. Similarly, the third suspension 20FRA, which is an active suspension, includes the actuator 26FR (hereinafter, also referred to as a "third actuator 26FR") in addition to a spring 22FR and a shock absorber 24FR.

The controller 30 is connected to the sensors 40 via an in-vehicle network, such as a controller area network (CAN). The controller 30 obtains signals from the sensors 40. The sensors 40 include sensors that measure physical quantities related to the behavior of the vehicle 10, such as an acceleration sensor, a vehicle height sensor, and a wheel speed sensor. Further, the controller 30 is also connected to the actuators 26RL, 26RR, and 26FR via the in-vehicle network.

The controller 30 includes a processor 32 and a memory 34 coupled to the processor 32.

The processor 32 executes various kinds of processing. The processor 32 may be configured by, for example, a CPU (Central Processing Unit) including an arithmetic unit and a register, a GPU (Graphics Processing Unit), an ASIC (Application Specific Integrated Circuit), and/or an FPGA (Field-Programmable Gate Array). The memory 34 stores various kinds of information necessary for the processor 32 to execute processing. The memory 34 can be configured with a recording medium, such as a read only memory (ROM), a random access memory (RAM), a hard disk drive (HDD), and/or a solid state drive (SSD).

The memory 34 stores a computer program 36 executable by the processor 32 and various kinds of information related to the computer program 36. The functions of the controller 30 are realized by cooperation between the processor 32 executing the computer program 36 and the memory 34 The computer program 36 may be recorded in a non-transitory computer-readable recording medium. The computer program 36 may also be distributed over the air (OTA).

The controller 30 controls the actuators 26RL, 26RR, and 26FR based on signals obtained from the sensors 40. In particular, the controller 30 executes processing to calculate position control amounts of the actuators 26RL, 26RR, and 26FR, and transmits the calculated position control amounts to the actuators 26RL, 26RR, and 26FR. That is, the controller 30 performs the position control on the actuators 26RL, 26RR, and 26FR. The position control amount may be a value that gives a target position, or may be a value that gives a movement amount from the current position. The processing executed by the controller 30 according to the first embodiment will be described below in detail.

Each of the actuators 26RL, 26RR, and 26FR operates in accordance with the position control amount received from the controller 30. Each of the actuators 26RL, 26RR, and 26FR is configured such that the control force applied to the corresponding controlled wheel changes depending on the controlled position.

The actuator as described above may be configured in various ways. Fig. 3 is a diagram used to describe an example of the configuration of the actuator 26 according to the first embodiment. In Fig. 3, an active suspension 20A including the actuator 26 is shown.

In the active suspension 20A shown in Fig. 3, the spring 22 and the damper 24 are provided between a vehicle body 12 and an unsprung member 21 (e.g., a suspension arm). The spring 22 generates a reaction force according to the stroke amount of the active suspension 20A.

The actuator 26 shown in Fig. 3 includes a motor 28 supported by the sprung structure, and a torsion bar 27 whose one end is connected to the output shaft of the motor 28. The other end of the torsion bar 27 is connected to the unsprung member 21 via a link mechanism 29. The operation of the motor 28 is controlled by the controller 30. In particular, in the present embodiment, the controller 30 performs the position control on the motor 28. Therefore, in this example, the position of the actuator 26 indicates the angle of the motor 28. Further, the position control amount is the target angle or rotation angle amount of the motor 28.

When the motor 28 rotates under the control of the controller 30, the torsion bar 27 deforms, and the reaction force of the torsion bar 27 is converted into a vertical force via the link mechanism 29 and transmitted to the unsprung member 21 and the wheel 14. In this way, the actuator 26 can actively apply a control force in the vertical direction to the unsprung member 21 and the wheel 14 by deforming the torsion bar 27. Furthermore, when the vehicle 10 is accelerated, decelerated, or steered, an external force input from the side of the unsprung member 21 is transmitted to the output shaft of the motor 28 via the link mechanism 29 and the torsion bar 27. The torsion bar 27 and the link mechanism 29 can also be said to be transmission members that transmit force between the motor 28 and each of the unsprung member 21 and the wheel 14.

As described above, the actuator 26 according to the present embodiment can be configured. In the vehicle behavior control apparatus according to the present embodiment, the configuration of the actuator 26 described with reference to Fig. 3 can be applied to each of the actuators 26RL, 26RR, and 26FR. However, the configuration of the actuator 26 described with reference to Fig. 3 is an example, and other configurations may also be applied.

For example, the actuator 26 may be configured by a coil spring and a linear motor. The coil spring has one end connected to the unsprung member 21. The linear motor operates to expand and contract the coil spring. In this example, when the linear motor operates under the control of the controller 30, the coil spring is deformed, and the reaction force of the coil spring is transmitted to the unsprung member 21 and the wheel 14. The coil spring can also be said to be a transmission member that transmits force between the linear motor and each of the unsprung member 21 and the wheel 14. Further, in this example, the position of the actuator 26 indicates, for example, the position of a movable part of the linear motor on the guide of the liner motor. The position control amount is, for example, the target position or movement amount of the movable part on the guide.

Moreover, for example, the actuator 26 may be configured by a motor supported by the sprung structure, a ball screw nut that rotates by the output of the motor, a ball screw shaft that moves axially by the rotation of the ball screw nut, and a piston rod whose one end is connected to the ball screw shaft. The other end of the piston rod is connected to the unsprung member 21 via a cylinder. In this example, when the motor rotates under the control of the controller 30, the ball screw nut rotates, and the axial force generated by the ball screw shaft and the piston rod is transmitted to the unsprung member 21 and the wheel 14. The ball screw nut, the ball screw shaft, and the piston rod can also be said to be transmission members that transmit force between the motor and each of the unsprung member 21 and the wheel 14.

The transmission member, such as the torsion bar 27, can be considered as an elastic member having a predetermined stiffness. Further, the motor 28 is considered to be fastened to a part of, for example, the vehicle body 12 or a suspension member. Therefore, the actuator 26 shown in Fig. 3 can be modeled as a spring element connected in parallel with the spring 22.

Fig. 4 shows the active suspension 20A modeled in terms of spring elements. In Fig. 4, Ks represents the stiffness of the spring 22, and Kb represents the stiffness of the torsion bar 27. Further, z1 and z2 indicate the displacements of the unsprung and sprung masses, respectively, with the upward direction in the drawing being the positive direction. That is, in the model shown in Fig. 4, z2-z1 is the stroke amount of the active suspension 20A. In addition, in the following description, the torsion bar 27 may be replaced with another transmission member depending on the configuration of the actuator 26.

The spring element associated with the torsion bar 27 generates a reaction force according to at least the stroke amount. Further, it can be considered that the spring element associated with the torsion bar 27 generates a reaction force corresponding to the relative displacement z$\Delta$ due to the position control of the actuator 26. In the model shown in Fig. 4, z$\Delta$ is positive in the direction in which the spring element extends. In the model shown in Fig. 4, a force F generated by the actuator 26 is expressed by the following Equation 3. The force F corresponds to the control force applied to the wheel 14 by the actuator 26. Even if a position command to the actuator 26 (motor 28) is zero, that is, even if the relative displacement z$\Delta$ is zero, the actuator 26 generates a force F according to the stroke amount (z2-z1).

[Math. 3]

$$F = Kb(z1 - z2 + z\Delta) \quad \cdots (3)$$

1.3 Behavior Control

The processing executed by the controller 30, more specifically, the processing executed by the processor 32, in the behavior control of the vehicle 10 according to the first embodiment will be described below. Fig. 5 is a flowchart showing an example of the processing executed by the controller 30 according to the first embodiment. The processing according to the flowchart shown in Fig. 5 may be repeatedly executed at a predetermined processing cycle.

In step S110, the controller 30 calculates required values of the behavior parameters. Alternatively, the controller 30 may obtain the required values of the behavior parameters from another device. In the first embodiment, the behavior parameters are the vertical control forces for the respective wheels. That is, in step S110, the controller 30 calculates (obtains) a required value of each of the vertical control force Frli for the left rear wheel RL, the vertical control force Frri for the right rear wheel RE, the vertical control force Ffli for the left front wheel FL, and the vertical control force Ffri for the right front wheel FR. As described above, in the present embodiment, the method for calculating the required values of the behavior parameters is not particularly limited.

Then, in step S120, the controller 30 converts the required values of the behavior parameters into the required values of the three modes at the gravity center. The controller 30 can use the above Equation 1 to convert the required values of the behavior parameters into the required roll moment Mr, the required pitch moment Mp, and the required heave force Fh.

Then, in step S130, the controller 30 further converts the required values of the three modes at the gravity center into the required control forces for the respective controlled wheels. The controller 30 can use the above Equation 2 to convert the required roll moment Mr, the required pitch moment Mp, and the required heave force Fh into a required control force Frl for the left rear wheel 14RL (hereinafter, also referred to as a "first required control force"), a required control force Frr for the right rear wheel 14RR (hereinafter, also referred to as a "second required control force"), and a required control force Ffr for the right front wheel 14FR (hereinafter, also referred to as a "third required control force").

Then, in step S140, the controller 30 calculates a stroke amount of the first suspension 20RLA (first required stroke amount), a stroke amount of the second suspension 20RRA (second required stroke amount), and a stroke amount of the third suspension 20FRA (third required stroke amount) when the required values of the behavior parameters are satisfied. Each required stroke amount can be considered as a stroke amount that each active suspension must satisfy in controlling the behavior of the vehicle 10.

The vertical control force for each wheel is proportional to the stroke amount of each suspension. Therefore, the stroke amount of each suspension can be calculated using the following Equation 4. Here, zsrl, zsrr, zsfr, and zsfl are the stroke amount of the first suspension 20RLA, the stroke amount of the second suspension 20RRA, the stroke amount of the third suspension 20FRA, and the stroke amount of the fourth suspension 20FL, respectively. Furthermore, Kr and Kf are proportionality constants related to the rear axle 16R and the front axle 16F, respectively. Kr and Kf are constants that can be determined from the specification information of the vehicle 10 and/or the state of the vehicle 10.
[Math. 4]

$$\begin{bmatrix} z_{sfl} \\ z_{sfr} \\ z_{srl} \\ z_{srr} \end{bmatrix} = \begin{bmatrix} F_{fli}/K_f \\ F_{fri}/K_f \\ F_{rli}/K_r \\ F_{rri}/K_r \end{bmatrix} \quad \cdots (4)$$

Therefore, the controller 30 can use Equation 4 to calculate the first required stroke amount zsrl, the second required stroke amount zsrr, and the third required stroke amount zsfl from the required values of Frli, Frri, and Ffri calculated as the required values of the behavior parameters.

Then, in step S150, the controller 30 calculates a position control amount of each of the actuators 26RL, 26RR, and 26FR that satisfies the required control force for each of the controlled wheels. In other words, the controller 30 calculates a position control amount (first position control amount) of the first actuator 26RL corresponding to the first required control force, a position control amount (second position control amount) of the second actuator 26RR corresponding to the second required control force, and a position control amount (third position control amount) of the third actuator 26FR corresponding to the third required control force. The controller 30 can calculate the first position control amount, the second position control amount, and the third position control amount as follows based on the required stroke amounts (the first required stroke amount zsrl, the second required stroke amount zsrr, and the third required stroke amount zsfl) calculated in step S140.

As described with reference to Fig. 4, the control force applied to the wheel 14 by the actuator 26 can be expressed by the above Equation 3 from the stroke amount and the relative displacement due to the position control. Therefore, by using Equation 3, the controller 30 can calculate a relative displacement related to the first actuator 26RL at which the first required control force Frl is obtained (hereinafter, also referred to as a "first required relative displacement"), based on the first required stroke amount zsrl. By substituting the first required stroke amount zsrl for z2-z1 in Equation 3 and substituting the first required control force Frl for the force F, the first required relative displacement $z\Delta rl$ is expressed by the following Equation 5.
[Math. 5]

$$z\Delta_{rl} = z_{srl} + \frac{F_{rl}}{K_b} \quad \cdots (5)$$

Similarly, by using Equation 3, the controller 30 can calculate a relative displacement $z\Delta rr$ related to the second actuator 26RR at which the second required control force Frr is obtained (hereinafter, also referred to as a "second required relative displacement $z\Delta rr$"), and a relative displacement $z\Delta fr$ related to the third actuator 26FR at which the third required control force Ffr is obtained (hereinafter, also referred to as a "third required relative displacement $z\Delta fr$"), based on the second required stroke amount zsrr and the third required stroke amount zsfl.

In the model shown in Fig. 4, the relative displacement $z\Delta$ is an amount that has a certain correspondence with the position of the actuator 26. In other words, if the correspondence relation between the relative displacement $z\Delta$ and the position of the actuator 26 is known, the relative displacement $z\Delta$ can be converted into the position of the actuator 26.

The correspondence relation between the relative displacement $z\Delta$ and the position of the actuator 26 can be determined from the design values of the active suspension 20A and/or the actual measured values thereof obtained through testing. For example, consider a test in which the angle θ of the motor 28 (the position of the actuator 26) and the stroke amount zs of the active suspension 20A are measured when the vehicle 10 is stationary and the motor 28 is rotated by the actuator 26 having the configuration shown in Fig. 3. This test allows a coefficient A in the following Equation 6 to be calculated. Further, at this time, the relation of the following Equation 7 is established.

[Math. 6]

$$A = \frac{z_s * Ks}{\theta} \quad \cdots (6)$$

$$z\Delta = \frac{K_s + K_b}{K_b} * z_s \quad \cdots (7)$$

Therefore, by determining the coefficient A through the test, the correspondence relation between the relative displacement $z\Delta$ and the angle $\theta$ of the motor 28 (the position of the actuator 26) can be expressed by the following Equation 8. That is, the relative displacement $z\Delta$ can be converted into the angle of the motor 28 (the position of the actuator 26) using Equation 8.

[Math. 7]

$$\theta = \frac{z\Delta * K_s * K_b}{A * (K_s + K_b)} \quad \cdots (8)$$

The correspondence relation between the relative displacement $z\Delta$ and the position of the actuator 26 may be stored in the memory 34 as a function expression or mapping information. Alternatively, the correspondence relation may be recorded as part of the computer program 36.

In this way, based on the correspondence relation between the relative displacement $z\Delta$ and the position of the actuator 26, the controller 30 can convert the first required relative displacement $z\Delta rl$ into the position of the first actuator 26RL. Further, the controller 30 may calculate the first position control amount so as to indicate the position of the first actuator 26RL obtained by the conversion. Similarly, the controller 30 can convert the second required relative displacement $z\Delta rr$ and the third required relative displacement $z\Delta fr$ into the position of the second actuator 26RR and the position of the third actuator 26FR, respectively. Further, the controller 30 may calculate the second position control amount and the third position control amount so as to indicate the position of the second actuator 26RR and the position of the third actuator 26FR obtained by the conversion.

As described above, the controller 30 can calculate the first position control amount, the second position control amount, and the third position control amount based on the respective required stroke amounts such that the required control forces for the respective controlled wheels are obtained.

Then, in step S160, the controller 30 performs the position control on the first actuator 26RL, the second actuator 26RR, and the third actuator 26FR in accordance with the calculated first position control amount, second position control amount, and third position control amount. As a result, the actuators 26RL, 26RR, and 26FR can be controlled so as to satisfy the first required control force Frl, the second required control force Frr, and the third required control force Ffr. Furthermore, the required values of the behavior parameters can be realized. After step S160, the controller 30 ends the processing for the current processing cycle.

The controller 30 executes the processing as described above, whereby the functions of the vehicle behavior control apparatus according to the first embodiment are realized. Further, the vehicle behavior control method according to the first embodiment is realized by the controller 30 executing the processing as described above. Furthermore, the vehicle behavior control program according to the first embodiment is realized by the computer program 36 causing the controller 30 to execute the processing as described above.

1.4 Correction of Required Value

In the example shown in Fig. 3, each of the actuators 26RL, 26RR, and 26FR includes a transmission member, such as the torsion bar 27 that transmits a reaction force generated by deformation as the control force. Also, each of the actuators 26RL, 26RR, and 26FR applies a vertical control force to each of the controlled wheels by deforming the transmission member. When the configuration as shown in Fig. 3 is used, each of the actuators 26RL, 26RR, and 26FR outputs a control force equivalent to the reaction force of the transmission member according to the stroke amount, even if the relative displacement $z\Delta$ is zero. For example, when the vehicle 10 turns, accelerates, or decelerates, a stroke amount is generated. Therefore, even if the relative displacement $z\Delta$ is zero, each of the actuators 26RL, 26RR, and 26FR outputs a control force equivalent to the reaction force of the transmission member according to the stroke amount.

On the other hand, in the vehicle behavior control apparatus according to the first embodiment, the fourth suspension 20FL provided on the left front wheel 14FL does not include an actuator. In other words, the fourth suspension 20FL does not include a transmission member, such as the torsion bar 27. Therefore, in the fourth suspension 20FL, no reaction force equivalent to the reaction force of the transmission member generated in each of the other suspensions is generated. This may cause an issue with the posture of the vehicle 10 during steering and/or acceleration/deceleration. This means that the suspension 20FL of the left front wheel 14FL is "softer" than the suspensions 20FR, 20RL, and 20RR of the other wheels 14FR, 14RL, and 14RR. That is, an imbalance in suspension hardness occurs between the left front wheel 14FL and the other wheels 14FR, 14RL, and 14RR. This kind of an imbalance in suspension hardness causes abnormal and/or uncomfortable tilting of the vehicle body during acceleration/deceleration and/or steering. Furthermore, an imbalance in suspension hardness causes a decrease in control performance, and/or excessive oversteer or understeer.

For example, consider a scene in which the required relative displacement related to each of the actuators 26RL, 26RR, and 26FR is zero when the vehicle 10 is decelerated by braking. At this time, the suspensions other than the fourth suspension 20FL output control forces equivalent to the reaction forces of the transmission members, and therefore the stroke amounts become small. On the other hand, the fourth suspension 20FL does not generate a reaction force equivalent to the reaction force of the transmission member, and therefore the stroke amount becomes large. As a result, the vehicle 10 may sink more on the side of the left front wheel 14FL than on the sides of the other wheels, resulting in a posture that appears to tilt in the roll direction. Furthermore, for example, when the vehicle 10 turns, the vehicle 10 sinks on the side of the left front wheel 14FL significantly during a right turn, while the vehicle 10 does not sink on the side of the right front wheel 14FR during a left turn as much as on the side of the left front wheel 14FL during a right turn. As just described, the posture of the vehicle 10 may differ depending on the direction of the turn.

To address the issue described above, in the vehicle behavior control apparatus according to the present embodiment, the required value of the behavior parameter may be corrected based on the assumption that the fourth suspension 20FL includes a transmission member, such as the torsion bar 27. In other words, the required value of the behavior parameter is corrected so as to realize a behavior of the vehicle 10 in which the reaction force of a transmission member can be regarded as being also generated by the fourth suspension 20FL. The correction of the required value of the behavior parameter can be performed based on a hypothetical reaction force value applied to the left front wheel 14FL by the transmission member assumed to be included in the fourth suspension 20FL.

When, for example, the transmission member is the torsion bar 27, the hypothetical reaction force value can be calculated as follows.

First, with respect to the acceleration and deceleration, a suspension sharing force Fflx of the left front wheel 14FL excluding a suspension link reaction force is calculated by the following Equation 9.
[Math. 8]

$$F_{flx} = \frac{1}{2}\left\{-\left(\frac{H}{l}ma_{xp} - ma_{xp}\alpha_{xp}\tan\theta_I\right) \right.$$
$$\left. + \left(\frac{H}{l}ma_{xm} - ma_{xm}\alpha_{xm}\tan\theta_I - ma_{xm}\alpha_{xm}(1-\alpha_k)\tan\theta_J\right)\right\} \quad \cdots (9)$$

Here, each parameter is defined as follows.

H: height of sprung center of gravity
1: wheelbase
m: sprung mass
axp: acceleration side of longitudinal G-forces
axm: deceleration side of longitudinal G-forces
αxp: front driving force distribution
αxm: front braking force distribution
αk: front regeneration ratio
tanθI: suspension link inclination angle in side view relative to wheel center (point I)
tanθJ: suspension link inclination angle in side view relative to tire-ground contact point (point J)

Additionally, in the above Equation 9, it is assumed that the driving force and the regenerative force act on the point I. In addition, the longitudinal G-forces of the vehicle 10 may be estimated based on a required torque or a required force of an engine or a drive motor, and a required force of braking or regeneration. Alternatively, the longitudinal G-forces may be obtained by a sensor.

Next, with respect to the steering, a suspension sharing force Ffly of the left front wheel 14FL excluding a suspension link reaction force is calculated by the following Equation 10.
[Math. 9]

$$F_{fly} = \frac{H}{2T_f} ma_y\gamma - C_{pf}\left(\delta - \beta - \frac{l_f}{V}r\right)\tan\theta_y \quad \cdots (10)$$

Here, each parameter is defined as follows.

β: vehicle body slip angle
V: vehicle speed
r: yaw rate
γ: front weighted movement distribution ratio
ay: lateral G-forces
Cpf: front wheel cornering power
tanθy: suspension link inclination angle in rear view

The lateral G-forces of the vehicle 10 may be estimated from the steering angle and the vehicle speed. Alternatively, the lateral G-forces may be obtained by a sensor.
The hypothetical reaction force value can be calculated by the following Equation 11 from the suspension sharing force Fflx of the left front wheel 14FL related to the acceleration and deceleration and the suspension sharing force Ffly of the left front wheel 14FL related to the steering. Here, Kbf is the assumed stiffness of the torsion bar 27 (including bush influence and link efficiency), and Ksf is the vertical stiffness of the suspension (excluding the amount of the torsion bar 27).
[Math. 10]

$$F_{flxy} = \frac{K_{bf}(F_{flx} + F_{fly})}{K_{bf} + K_{sf}} \quad \cdots (11)$$

In the first embodiment, the required value of the behavior parameter is the required value of the vertical control force for each wheel. Therefore, in the first embodiment, the correction of the required value of the behavior parameter can be performed by adding the hypothetical reaction force value calculated by Equation 11 to the required value of the vertical control force for the left front wheel FL. That is, with respect to the corrected required value of the behavior parameter, the required value of the vertical control force for the left front wheel FL is expressed by F'rli in the following Equation 12. In Equation 12, Frli represents the required value before the correction.
[Math. 11]

$$F'_{rli} = F_{rli} + F_{flxy} \quad \cdots (12)$$

The controller 30 can be configured to execute the processing according to a flowchart shown in Fig. 6 after calculating the required values of the behavior parameters (step S110 in Fig. 5).
In step S111, based on the assumption that the fourth suspension 20FL includes a transmission member, such as the torsion bar 27, the controller 30 calculates a hypothetical reaction force value applied to the left front wheel FL by the transmission member assumed to be included in the fourth suspension 20FL. For example, the controller 30 can calculate the hypothetical reaction force value using the above Equations 9-11.
Then, in step S112, the controller 30 corrects the required value of the behavior parameter based on the calculated hypothetical reaction force value. In the first embodiment, the controller 30 corrects the required value of the behavior parameter by adding the hypothetical reaction force value to the required value of the vertical control force for the left front wheel FL, as shown in Equation 12.
After step S112, the processing may proceed to step S120 in Fig. 5. At this time, the required value of the behavior parameter is the corrected required value.

1.5 Advantageous Effects

As described above, according to the first embodiment, with regard to the behavior control of the four-wheeled vehicle 10, the controllability equivalent to that achieved when an active suspension is provided on each wheel can be achieved using the three active suspensions 20RLA, 20RRA, and 20FRA. This can reduce the number of actuators required, thereby improving ease of mounting, reducing costs, reducing weight, and saving power, for example. Furthermore, according to the first embodiment, the actuators 26RL, 26RR, and 26FR are controlled by the position control. That is, there is no need for a force sensor or torque sensor, and the mounting space and costs for the actuators 26RL, 26RR, and 26FR can be reduced. This further enables improvement in ease of mounting and reduction in cost.

In the embodiment described above, the suspension 20FL provided on the left front wheel 14FL is a non-active suspension. However, in the vehicle behavior control apparatus of the first embodiment, it is possible to freely determine which three of the four wheels will be provided with an active suspension. For example, the suspension 20RRA provided on the right rear wheel 14RR may be a non-active suspension, and the suspensions 20RLA, 20FL, and 20FRA provided on the other wheels 14RL, 14FL, and 14FR may be active suspensions.

2. Second Embodiment

The vehicle behavior control apparatus according to the second embodiment will be described below. In the following description, the differences from the first embodiment will be mainly described, and contents common to the first embodiment will be omitted as appropriate.

2.1 Behavior Control

The behavior control of the vehicle 10 by the vehicle behavior control apparatus according to the second embodiment is performed based on the behavior model shown in Fig. 1, as in the first embodiment. However, in the second embodiment, the three modes at the gravity center are used as the behavior parameters. That is, the required values of the behavior parameters according to the second embodiment are the required roll moment Mr, the required pitch moment Mp, and the required heave force Fh. Thus, the required values of the behavior parameters directly correspond to the required values of the three modes at the gravity center.

The configuration of the vehicle behavior control apparatus according to the second embodiment may be the same as the configuration described with reference to Fig. 2. The processing executed by the controller 30, more specifically, the processing executed by the processor 32, in the behavior control of the vehicle 10 according to the second embodiment will be described below. Fig. 7 is a flowchart showing an example of the processing executed by the controller 30 according to the second embodiment. The processing according to the flowchart shown in Fig. 7 may be repeatedly executed at a predetermined processing cycle.

In step S210, the controller 30 calculates the required values of the behavior parameters. Alternatively, the controller 30 may obtain the required values of the behavior parameters from another device. In the second embodiment, the behavior parameters are three modes at the gravity center for the roll moment Mr, the pitch moment Mp, and the heave force Fh. That is, in step S210, the controller 30 calculates (obtains) the required roll moment Mr, the required pitch moment Mp, and the required heave force Fh. As in the first embodiment, the method for calculating the required values of the behavior parameters is not particularly limited.

Then, in step S230, the controller 30 converts the required values of the three modes at the gravity center into the required control forces for the respective controlled wheels. The processing in step S230 is the same as the processing in step S130 described with reference to Fig. 5.

Then, in step S240, the controller 30 calculates the first required stroke amount, the second required stroke amount, and the third required stroke amount when each of the required values of the behavior parameters is satisfied.

As described in the first embodiment, the stroke amount of each suspension can be calculated from the control force for each wheel using the above Equation 4. On the other hand, in the second embodiment, the required values of the behavior parameters are the required values of the three modes at the gravity center. Therefore, the controller 30 first converts the required values of the three modes at the gravity center into the control forces for each wheel using the following Equation 13. Hereinafter, the value of each of the control forces for the respective wheels obtained by converting the required values of the three modes at the gravity center will be referred to as a "converted required value". In Equation 13, Frlz is a converted required value of the control force for the left rear wheel, Frrz is a converted required value of the control force for the right rear wheel, Fflz is a converted required value of the control force for the left front wheel, and Ffrz is a converted required value of the control force for the right front wheel.

[Math. 12]

$$\begin{bmatrix} F_{flz} \\ F_{frz} \\ F_{rlz} \\ F_{rrz} \end{bmatrix} = \begin{bmatrix} \dfrac{l_r}{2l} & \dfrac{1}{2T_f} & -\dfrac{1}{4l_f} \\[2ex] \dfrac{l_r}{2l} & -\dfrac{1}{2T_f} & -\dfrac{1}{4l_f} \\[2ex] \dfrac{l_f}{2l} & -\dfrac{1}{2T_r} & \dfrac{1}{4l_f} \\[2ex] \dfrac{l_f}{2l} & \dfrac{1}{2T_r} & \dfrac{1}{4l_r} \end{bmatrix} \begin{bmatrix} F_h \\ M_r \\ M_p \end{bmatrix} \quad \cdots (13)$$

The controller 30 can then calculate the first required stroke amount zsrl, the second required stroke amount zsrr, and the third required stroke amount zsfl using the following Equation 14.
[Math. 13]

$$\begin{bmatrix} z_{sfl} \\ z_{sfr} \\ z_{srl} \\ z_{srr} \end{bmatrix} = \begin{bmatrix} F_{flz}/K_f \\ F_{frz}/K_f \\ F_{rlz}/K_r \\ F_{rrz}/K_r \end{bmatrix} \quad \cdots (14)$$

Then, in step S250, the controller 30 calculates the position control amount of each of the actuators 26RL, 26RR, and 26FR that satisfies the required control force for each controlled wheel. The processing in step S230 is the same as the processing in step S150 described with reference to Fig. 5.

Then, in step S260, the controller 30 performs the position control on the first actuator 26RL, the second actuator 26RR, and the third actuator 26FR in accordance with the calculated first position control amount, second position control amount, and third position control amount. As a result, the required values of the behavior parameters are realized. After step S260, the controller 30 ends the processing for the current processing cycle.

The controller 30 executes the processing as described above, whereby the functions of the vehicle behavior control apparatus according to the second embodiment are realized. Further, the vehicle behavior control method according to the second embodiment is realized by the controller 30 executing the processing as described above. Furthermore, the vehicle behavior control program according to the second embodiment is realized by the computer program 36 causing the controller 30 to execute the processing as described above.

2.2 Correction of Required Value

In the second embodiment, similarly to the first embodiment, the correction of the required values of the behavior parameters can be performed based on the assumption that the fourth suspension 20FL includes a transmission member, such as the torsion bar 27. As in the first embodiment, the correction of the required values of the behavior parameters can be performed based on a hypothetical reaction force value applied to the left front wheel 14FL by a transmission member assumed to be included in the fourth suspension 20FL. The hypothetical reaction force value Fflxy can be calculated using the above Equations 9-11.

In the second embodiment, the required values of the behavior parameters are the required roll moment Mr, the required pitch moment Mp, and the required heave force Fh. Therefore, in the second embodiment, the hypothetical reaction force value Fflxy is first converted into the three modes at the gravity center by the following Equation 15. Hereinafter, the value of each of the three modes at the gravity center obtained by converting the hypothetical reaction force value Fflxy will be referred to as a "converted reaction force value". In Equation 15, Mrflxy is a converted reaction force value related to the roll moment, Mpflxy is a converted reaction force value related to the pitch moment, and Fhflxy is a converted reaction force value related to the heave force.
[Math. 14]

$$\begin{bmatrix} F_{hflxy} \\ M_{rflxy} \\ M_{pflxy} \end{bmatrix} = \begin{bmatrix} 0 & 1 & 0 & 0 \\ 0 & \dfrac{T_f}{2} & 0 & 0 \\ 0 & -l_f & 0 & 0 \end{bmatrix} \begin{bmatrix} 0 \\ F_{flxy} \\ 0 \\ 0 \end{bmatrix} \quad \cdots (15)$$

The correction of the required values of the behavior parameters can be performed by adding the converted reaction force values obtained by Equation 16 to the required roll moment Mr, the required pitch moment Mp, and the required heave force Fh. That is, with respect to the required values of the corrected behavior parameters, the required roll moment, the required pitch moment, and the required heave force are respectively expressed by M'r, M'p, and F'h in the following Equation 16. In Equation 15, Mr, Mp, and Fh are the roll moment, the pitch moment, and the heave force before the correction, respectively.

[Math. 15]

$$\begin{bmatrix} F_h' \\ M_r' \\ M_p' \end{bmatrix} = \begin{bmatrix} F_h + F_{hfxly} \\ M_r + M_{rflxy} \\ M_p + M_{pflxy} \end{bmatrix} \quad \cdots (16)$$

As in the first embodiment, the controller 30 can be configured to execute the processing according to the flowchart shown in Fig. 6 after calculating the required values of the behavior parameters (step S210 in Fig. 7). In the second embodiment, in step S112, as shown in equations 15-16, the controller 30 calculates the converted reaction force values by converting the hypothetical reaction force value into the three modes at the gravity center, and corrects the required values of the behavior parameters by adding the converted reaction force values to the required roll moment Mr, the required pitch moment Mp, and the required heave force Fh. After step S112, the processing may proceed to step S230 in Fig. 7. At this time, the required values of the behavior parameters are the corrected required values.

2.5 Advantageous Effects

As can be understood from the above description, the second embodiment can also achieve the same functions and effects as the first embodiment.

Although the embodiments have been described above in detail, these embodiments merely show specific examples of implementing the technique according to the present disclosure. Therefore, the technical scope of the present disclosure is not limited to the above-described embodiments. The technique according to the present disclosure can be modified in various ways without departing from the spirit thereof, and these modifications are also included in the technical scope of the present disclosure.

[Reference Signs List]

10: vehicle, 30: controller, 32: processor, 34: memory, 36: computer program, 20RLA: First suspension, 20RRA: second suspension, 20FRA: third suspension, 20FL: fourth suspension, 26RL: first actuator, 26RR: second actuator, 26FR: third actuator, 27: torsion bar

**Claims**

1. A vehicle behavior control apparatus comprising:

   an i-th suspension provided on an i-th wheel (i=1, 2, 3) among four wheels of a vehicle;
   a fourth suspension provided on a fourth wheel other than the i-th wheel; and
   a controller, wherein
   the i-th suspension includes an i-th actuator whose position control is performed by the controller, and
   the controller is configured to:

   obtain a required value of a behavior parameter that determines behavior of the vehicle;

convert the required value of the behavior parameter into an i-th required control force for the i-th wheel;
calculate an i-th position control amount of the i-th actuator based on the i-th required control force; and
perform the position control on the i-th actuator in accordance with the i-th position control amount.

2. The vehicle behavior control apparatus according to claim 1, wherein
the fourth suspension does not include an actuator controlled by the controller.

3. The vehicle behavior control apparatus according to claim 1, wherein
the controller is further configured to:

calculate an i-th required stroke amount of the i-th suspension when the required value of the behavior parameter is satisfied; and
calculate the i-th position control amount based on the i-th required stroke amount such that the i-th required control force is obtained.

4. The vehicle behavior control apparatus according to claim 3, wherein

the behavior parameter is a control force for each of the i-th wheel and the fourth wheel, and
the controller is further configured to calculate the i-th required stroke amount of the i-th suspension corresponding to the required value regarding the control force for the i-th wheel.

5. The vehicle behavior control apparatus according to claim 3, wherein

the behavior parameter is a roll moment, a pitch moment, and a heave force, which act on a gravity center of the vehicle, and
the controller is further configured to:

convert the required value regarding each of the roll moment, the pitch moment, and the heave force into a converted required value of a control force for each of the i-th wheel and the fourth wheel; and
calculate the i-th required stroke amount of the i-th suspension corresponding to the converted required value of the control force for the i-th wheel.

6. The vehicle behavior control apparatus according to any one of claims 1 to 5, wherein

the i-th actuator includes a transmission member that transmits, as a control force, a reaction force generated by deformation, and
the i-th actuator is configured to apply a vertical control force to the i-th wheel by deforming the transmission member.

7. The vehicle behavior control apparatus according to claim 6, wherein
the transmission member is a torsion bar.

8. The vehicle behavior control apparatus according to claim 6, wherein

the fourth suspension does not include an actuator controlled by the controller, and
the controller is further configured to:

calculate, based on an assumption that the fourth suspension includes the transmission member, a hypothetical reaction force value applied to the fourth wheel by the transmission member assumed to be included in the fourth suspension; and
correct the required value based on the hypothetical reaction force value.

9. The vehicle behavior control apparatus according to claim 8, wherein

the behavior parameter is a control force for each of the i-th wheel and the fourth wheel, and
the controller is further configured to correct the required value by adding the hypothetical reaction force value to the required value regarding the control force for the fourth wheel.

10. The vehicle behavior control apparatus according to claim 8, wherein

the behavior parameter is a roll moment, a pitch moment, and a heave force, which act on a gravity center of the vehicle, and

the controller is further configured to:

convert the hypothetical reaction force value into a converted reaction force value of each of the roll moment, the pitch moment, and the heave force; and

correct the required value by adding the converted reaction force value to the required value regarding each of the roll moment, the pitch moment, and the heave force.

11. A vehicle behavior control method of controlling behavior of a vehicle by a computer,

the vehicle including an i-th suspension provided on an i-th wheel (i=1, 2, 3) among four wheels, and a fourth suspension provided on a fourth wheel other than the i-th wheel,

the i-th suspension including an i-th actuator whose position control is performed,

the vehicle behavior control method comprising:

obtaining a required value of a behavior parameter that determines the behavior of the vehicle;

converting the required value of the behavior parameter into an i-th required control force for the i-th wheel;

calculating an i-th position control amount of the i-th actuator based on the i-th required control force; and

performing the position control on the i-th actuator in accordance with the i-th position control amount.

12. A vehicle behavior control program that causes a computer to control behavior of a vehicle,

the vehicle including an i-th suspension provided on an i-th wheel (i=1, 2, 3) among four wheels, and a fourth suspension provided on a fourth wheel other than the i-th wheel,

the i-th suspension including an i-th actuator whose position control is performed,

the vehicle behavior control program causing the computer to execute:

processing of obtaining a required value of a behavior parameter that determines the behavior of the vehicle;

processing of converting the required value of the behavior parameter into an i-th required control force for the i-th wheel;

processing of calculating an i-th position control amount of the i-th actuator based on the i-th required control force; and

processing of performing the position control on the i-th actuator in accordance with the i-th position control amount.

[Fig. 1]

[Fig. 2]

[Fig. 3]

[Fig. 4]

[Fig. 5]

```
                              ┌─────────────┐
                              │    START    │
                              └─────────────┘
                                     │
                                     ▼
S110  ┌──────────────────────────────────────────────────────────┐
      │          Calculate (obtain) required values of            │
      │  behavior parameters (vertical control forces for respective wheels)  │
      └──────────────────────────────────────────────────────────┘
                                     │
                                     ▼
S120  ┌──────────────────────────────────────────────────────────┐
      │       Convert require values of behavior parameters into  │
      │          required values of three modes at gravity center │
      └──────────────────────────────────────────────────────────┘
                                     │
                                     ▼
S130  ┌──────────────────────────────────────────────────────────┐
      │   Convert required values of three modes at gravity center into  │
      │          required control forces for respective control wheels   │
      └──────────────────────────────────────────────────────────┘
                                     │
                                     ▼
S140  ┌──────────────────────────────────────────────────────────┐
      │  Calculate i-th required stroke amount (i=1, 2, 3) of i-th suspension  │
      │              when each required value is satisfied        │
      └──────────────────────────────────────────────────────────┘
                                     │
                                     ▼
S150  ┌──────────────────────────────────────────────────────────┐
      │           Calculate i-th position control amount          │
      │       based on i-th required stroke amount (i=1, 2, 3)     │
      │  such that required control force for each control wheel is obtained  │
      └──────────────────────────────────────────────────────────┘
                                     │
                                     ▼
S160  ┌──────────────────────────────────────────────────────────┐
      │            Perform position control on i-th actuator      │
      │  in accordance with i-th position control amount (i=1, 2, 3)  │
      └──────────────────────────────────────────────────────────┘
                                     │
                                     ▼
                              ┌─────────────┐
                              │     END     │
                              └─────────────┘
```

[Fig. 6]

```
                                    ┌──────────────┐
                                    │    START     │
                                    └──────┬───────┘
                                           │
                                           ▼
S111 ┌──────────────────────────────────────────────────────────┐
     │                                                            │
     │          Calculate hypothetical reaction force value       │
     │                                                            │
     └──────────────────────────────┬───────────────────────────┘
                                     │
                                     ▼
S112 ┌──────────────────────────────────────────────────────────┐
     │                                                            │
     │   Correct required value based on hypothetical reaction force value │
     │                                                            │
     └──────────────────────────────┬───────────────────────────┘
                                     │
                                     ▼
                            ┌──────────────┐
                            │    RETURN     │
                            └──────────────┘
```

**[Fig. 7]**

```
                    ┌─────────────┐
                    │    START    │
                    └─────────────┘
                           │
                           ▼
S210 ┌──────────────────────────────────────────────────────┐
     │  Calculate (obtain) required values of behavior      │
     │  parameters (three modes at gravity center)          │
     └──────────────────────────────────────────────────────┘
                           │
                           ▼
S230 ┌──────────────────────────────────────────────────────┐
     │  Convert required values for three modes at gravity  │
     │  center into required control forces for respective  │
     │  control wheels                                       │
     └──────────────────────────────────────────────────────┘
                           │
                           ▼
S240 ┌──────────────────────────────────────────────────────┐
     │  Calculate i-th required stroke amount (i=1, 2, 3)   │
     │  of i-th suspension when each required value is       │
     │  satisfied                                            │
     └──────────────────────────────────────────────────────┘
                           │
                           ▼
S250 ┌──────────────────────────────────────────────────────┐
     │  Calculate i-th position control amount              │
     │  based on i-th required stroke amount (i=1, 2, 3)    │
     │  such that required control force for each control   │
     │  wheel is obtained                                    │
     └──────────────────────────────────────────────────────┘
                           │
                           ▼
S260 ┌──────────────────────────────────────────────────────┐
     │  Perform position control on i-th actuator           │
     │  in accordance with i-th position control amount     │
     │  (i=1, 2, 3)                                          │
     └──────────────────────────────────────────────────────┘
                           │
                           ▼
                    ┌─────────────┐
                    │     END     │
                    └─────────────┘
```

## INTERNATIONAL SEARCH REPORT

| International application No. |
| --- |
| **PCT/JP2024/020014** |

**A. CLASSIFICATION OF SUBJECT MATTER**

***B60G 17/015***(2006.01)i
FI: B60G17/015 Z

According to International Patent Classification (IPC) or to both national classification and IPC

**B. FIELDS SEARCHED**

Minimum documentation searched (classification system followed by classification symbols)

B60G17/015

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2023-047810 A (TOYOTA JIDOSHA KABUSHIKI KAISHA) 06 April 2023 (2023-04-06) entire text, all drawings | 1-12 |
| A | JP 2013-126821 A (TOYOTA JIDOSHA KABUSHIKI KAISHA) 27 June 2013 (2013-06-27) entire text, all drawings | 1-12 |
| A | JP 2009-006884 A (NISSAN MOTOR CO., LTD.) 15 January 2009 (2009-01-15) entire text, all drawings | 1-12 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **04 July 2024** | **16 July 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

| International application No. |
| --- |
| **PCT/JP2024/020014** |

| Patent document cited in search report | | | Publication date (day/month/year) | Patent family member(s) | | | Publication date (day/month/year) |
| --- | --- | --- | --- | --- | --- | --- | --- |
| JP | 2023-047810 | A | 06 April 2023 | US 2023/0097516 A1 entire text, all drawings CN 115871396 A | | | |
| JP | 2013-126821 | A | 27 June 2013 | (Family: none) | | | |
| JP | 2009-006884 | A | 15 January 2009 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023047810 A